# EUROPÄISCHE PATENTSCHRIFT

(11) **EP 3 776 257 B1**
(45) Veröffentlichungstag und Bekanntmachung des Hinweises auf die Patenterteilung: **14.12.2022**
(21) Anmeldenummer: 19729612.2
(22) Anmeldetag: 30.04.2019
(51) Int. Cl.: G06F 21/62, G06Q 10/06, G06F 16/28

(54) **OBJEKTDATENBANK ZUR GESCHÄFTSMODELLIERUNG MIT VERBESSERTER DATENSICHERHEIT**
OBJECT DATABASE FOR BUSINESS MODELLING WITH IMPROVED DATA SECURITY
BASE DE DONNÉES D'OBJETS POUR L'ÉTABLISSEMENT DE MODELES D'ENTREPRISE AVEC SÉCURITÉ DE DONNÉES AMÉLIORÉE

(30) Priorität: 02.05.2018 DE 102018110441; 17.05.2018 DE 102018111867
(43) Veröffentlichungstag der Anmeldung: 17.02.2021
(73) Patentinhaber: Biermann, Gerhard, 33100 Paderborn (DE)
(72) Erfinder: Biermann, Gerhard, 33100 Paderborn (DE)
(74) Vertreter: Ostermann, Thomas
(86) Internationale Anmeldenummer: PCT/DE2019/100385
(87) Internationale Veröffentlichungsnummer: WO 2019/210909

(56) Entgegenhaltungen:
- US-A- 6 078 926
- US-A1- 2005 149 344
- US-A1- 2017 351 980
- US-B1- 9 600 136

## Beschreibung

Die Erfindung betrifft ein Verfahren zum Verarbeiten von Datenbankdaten in einem verteilten Objektdatenbanksystem nach dem Oberbegriff des Patentanspruchs 1.

Ferner betrifft die Erfindung eine Vorrichtung zum Verarbeiten von Datenbankdaten in einem Objektdatenbanksystem nach dem Oberbegriff des Patentanspruchs 8.

### 1. Anwendungsgebiet

Die Erfindung bezieht sich auf eine modulare Objektdatenbank für eine holistische, objektorientierte Geschäftsmodellierung, in der Geschäftsdaten und -prozesse jeglicher Art in Objekten getrennt in Key- und Werteobjekten abgebildet sind, wobei die Attribute und Methoden der Objekte ebenfalls getrennt voneinander gespeichert werden, und deren Datenbankmanagement-System selbst als Objekte der Objektdatenbank implementiert ist, wodurch insgesamt eine einfachere Handhabung der Objektdatenbank und eine wesentlich verbesserte Datensicherheit erreicht wird.

Hinweise:
Die im Folgenden behandelten Themen Geschäftsmodellierung, Datenbanken und Datensicherheit sind sehr komplexe Themen, so dass nur einzelne Aspekte und Beispiele im Kapitel Stand der Technik behandelt werden können, die aber so gewählt sind, dass sie den aktuellen Status verdeutlichen. Die im Folgenden benutzten Beispiele stellen nur eine kleine Auswahl dar und haben keinen Anspruch auf Vollständigkeit. Die im Folgenden benutzten Bezeichnungen und Namen dienen einem besseren Verständnis und können durch beliebige andere Bezeichnungen und
Namen ersetzt werden, insbesondere bei den Bezeichnungen, die zur vorgeschlagenen Objektdatenbank gehören, wie z.B. 'Businessobjekt'.

### 2. Stand der Technik

### 2.1. Geschäftsmodellierung

Der Begriff Geschäftsmodellierung wird häufig als Synonym für die Geschäftsprozessmodellierung verwendet und ist nicht mit dem Begriff Geschäftsmodell zu verwechseln. Geschäftsmodellierung geht im Folgenden über eine reine Prozessmodellierung insofern darüber hinaus, dass Daten- und Prozessmodellierung zusammen betrachtet werden. Zur Vereinfachung schließt der Begriff Unternehmung im Folgenden jegliche Art von Unternehmen, Firmen, Gewerbe, Verwaltungen, Lehranstalten, Institutionen, Organisationen, Vereinen, Privatpersonen e.a. ein.

Der aktuelle Stand der Geschäftsmodellierung spiegelt sich am besten in international anerkannten Standards wie z.B. die ISO 9001 und die dazu angelehnte IATF 16949 für die Automobilindustrie wider. Die ISO 9001 gilt nicht nur für produzierende Unternehmen, sondern auch für Unternehmungen, die irgendeine Art an Dienstleistungen erbringen. Eine Zertifizierung eines Unternehmens nach ISO 9001 soll Kunden, Lieferanten oder anderen Beteiligten die Sicherheit geben, dass ein Unternehmen umfassend nach hohen, standardisierten Qualitätskriterien handelt. Dafür sind Unternehmensziele z.B. in den Bereichen Kundenorientierung, Lieferantenbeziehungen und Führung festzulegen, die Zielerreichung zu überprüfen und eine ständige Verbesserung anzustreben. Die ISO fordert dafür einen prozessorientierten Ansatz, was bedeutet, dass eine Unternehmung eine vollständige Prozesslandschaft und -struktur definieren muss.

Bei einer solchen prozessorientierten Geschäftsmodellierung stehen die Abläufe mit deren Verantwortlichkeiten im Vordergrund, während die Daten nur als Parameter fungieren. Prozesse werden oft in eigenen Datenbanken gespeichert, wo sie in der Regel nur dokumentiert und als Information abrufbar sind und nicht automatisiert ablaufen können. Datenflüsse sind damit oft nur schwierig nachzuverfolgen und eine Automatisierung ist oft sehr aufwendig, weil die Daten in unterschiedlichen Datenbanken gespeichert sind, wie z.B. in Produktdatenmanagement-Systemen, Produktanforderungs-Systemen, Normeninformations-Systemen, Personaldatenbanken, Projektmanagement-Systemen. Aufgrund der unterschiedlichen Datenbanken ist es sehr aufwendig, Daten oder Informationen miteinander zu verknüpfen wie z.B. die Verknüpfung einer Zeichnung in einer Werksnorm, die als Dokument in einer Normendatenbank gespeichert ist, mit der Geometrie einer Komponente eines Produktes, das in einer Produktdaten-Datenbank gespeichert ist, oder darüber hinaus sogar das automatische Einfügen der Zeichnung in die Komponente. Neben den beispielhaft erwähnten Einzeldatenbanken gibt es monolithische Systeme, die ganze Themenbereiche abdecken wie z.B. ProductLifecycleManagenent-Systeme (PLM). Die verschiedenen Aspekte des PLM setzen auf eine gemeinsame Datenbasis auf, so dass Verknüpfungen zwischen den Daten einfacher herzustellen sind, z.B. zwischen den Produktanforderungen und den Produktdaten. Änderungen an der Datenbasis sind allerdings mit erheblichen Aufwänden verbunden.

Für die Beschreibung der Prozessstrukturen stehen verschiedene Methoden zur Verfügung. Ablaufdiagramme sind eine visuelle Darstellung von Prozessen, die mit Methoden wie EPK (Ereignisgesteuerte Prozesskette) oder BPMN (Business Process Model and Notification, eine standardisierte Beschreibungssprache) modelliert werden. Eine oft genutzte Art der Visualisierung von Prozessen ist die Swimlane Darstellung. Für jeden Verantwortungsbereich oder Akteur in einem Prozess gibt es eine Reihe oder Spalte, in der die Prozessschritte dargestellt sind, die der Akteur zu verantworten hat. Pfeile zeigen den Prozessfluss an und durch den Übergang von einem Prozessschritt in einer Lane zu einem anderen in einer anderen Lane werden die Verantwortungen visuell deutlich dargestellt. Diese Darstellungsart macht deutlich, dass es bei der prozessorientierten Geschäftsmodellierung eines der Ziele ist zu beschreiben, welche Rolle in der Unternehmung wann was zu tun hat. Verschiedene Rollen in einer Unternehmung sind für die Erstellung und Ausführung der Prozesse verantwortlich; in der Regel wird nicht vorgesehen, das Daten selbstständig Prozesse steuern und ausführen können.

### 2.2 Wissensmanagement

In der Revision 2015 der ISO 9001 sind auch Forderungen zum Wissensmanagement zu finden, denn dieses Thema nimmt in Unternehmungen immer mehr an Bedeutung zu. Auch wenn der Wert von Wissen nicht konkret beziffert werden kann, ist Wissen ein wichtiges Kapital für Unternehmungen. Der Schutz von Wissen spielt dabei eine große Rolle, weil nicht jeder auf das gesamte Know-how zugreifen darf. Das Ziel des Wissensmanagements ist es, in einer Unternehmung die richtige Information zur richtigen Zeit am richtigen Ort zur Verfügung zu stellen. Verschiedene Kategorien spezifizieren das Wissen: implizit versus explizit, individuell versus organisationell und extern versus intern. Während explizites Wissen gut dokumentierbar ist wie z.B. in Handbüchern, Normen, Prozessen, Regeln usw., ist das implizite Wissen schwer zu erfassen, denn es beruht auf Erfahrungen, Fähigkeiten usw., was es zu einem individuellen Wissen macht, oder es ist in Datenbeständen vorhanden, wo es erst durch Analysen gewonnen werden muss. Wissen kann auf unterschiedlichste Art und Weisen dokumentiert werden, wie oben beschrieben oder auch in großen Wissensdatenbanken, die eine Unmenge an Informationen bereitstellen und sich nicht bewährt haben, oder in der Form von Regeln. Regeln sind oft als Konditionalsätze formuliert: Wenn eine Bedingung erfüllt ist, dann triff eine bestimmte Entscheidung oder reagiere mit einer Aktion. Regeln können z.B. bei der Analyse von Datenbeständen helfen: Wenn B ist Kind von A und A ist weiblich, dann ist A Mutter von B. Dadurch können Mütter in der Datenbank gefunden werden, ohne dass 'Mutter' selbst im Datenbestand vorkommt. Und sie können Aktionen triggern: Wenn Produkt A hat als Bestandteil Komponente B, dann füge Standardgeometrie C in Komponente B ein. Business-Rule-Management-Systeme (BRMS) bieten Unternehmungen die Möglichkeit, Regeln von Experten definieren zu lassen, die entweder von IT Experten oder automatisch in Software umgesetzt werden. Für ein selbst agierendes Wissen sind Regeln eine wichtige Ausdrucksform. Das Problem dabei ist, dass Regeln auf Daten zugreifen müssen, die in unterschiedlichen Datenbankensystemen gespeichert sind, so dass nur mit aufwendig zu implementierenden Schnittstellen der Zugriff möglich ist.

### 2.3 Datenbanken

Für die Speicherung der in einer Unternehmung anfallenden Daten - Prozesse sind wie oben beschrieben im Regelfall auch nur Daten - werden zumeist relationale Datenbanken eingesetzt. Sie speichern Daten in Form von relationalen Tabellen, die konkrete Daten und auch gleichzeitig Keys zu Zeilen in anderen Tabellen, die Relationen, beinhalten. Für den Zugriff auf konkrete Daten in den Tabellen ist das Datenbankmanagementsystem (DBMS) zuständig, das u.a. Datenoperationen bereitstellt und die Datenintegrität sicherstellt. Das DBMS verarbeitet Befehle, die in der Structured Query Language (SQL) programmiert werden, und kann so Strukturen anlegen und Daten speichern oder lesen. Komplexe Datenstrukturen lassen sich nur schwer auf die flachen relationalen Tabellenstrukturen abbilden. Ebenso sind Änderungen und Erweiterungen komplexer Tabellenstrukturen nur mit erheblichem Aufwand zu bewerkstelligen.

Im Vergleich zu den relationalen Datenbanken sind objektorientierte Datenbanken (OODB) eher selten anzutreffen. Eine OODB bietet die Möglichkeit, Objekte mit ihren Eigenschaften (Attribute) und Verhalten (Methoden) als Struktur oder Schema der Daten anzulegen und Werte als deren Instanzen zu speichern. Die Attribute selbst können aus anderen Objekten bestehen. Auch hier regelt ein Datenbankmanagementsystem die entsprechenden Datenverarbeitungsschritte, in diesem Fall das objektorientierte Datenbankmanagementsystem (ooDBMS). Der objektorientierte Ansatz unterstützt im Gegensatz zu den relationalen Methoden eine einfachere Abbildung komplexer Datenstrukturen. Dagegen haben die objektorientierten Datenbanken einen Nachteil bei der Verarbeitung großer Datenmengen, weil z.B. die Zugriffspfade durch Mechanismen wie Vererbung usw. komplexer werden.

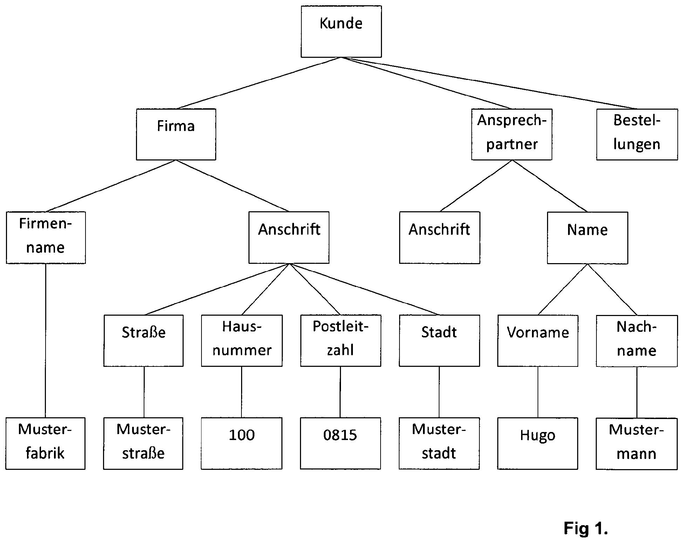

Prinzipiell lassen sich alle realen und virtuellen Dinge und Themen, die einer bestimmten Klasse mit definierten, gleichen Eigenschaften angehören, also auch alles, was Unternehmungen ausmacht, als Objekte darstellen: beispielsweise ein Produkt mit seinen Unterbaugruppen, eine Dienstleistung, eine Produktanforderung, der Kunde, ein Angebot, eine Norm, eine Organisationseinheit, eine Schulung. Die Beispiele zeigen, dass ein Objekt eine mehr oder weniger komplexe Struktur besitzen kann und dass es sich strukturell aus anderen Objekten zusammensetzen kann. So kann zu einem Kunden u.a. eine Firma mit Firmennamen und -anschrift, ein Ansprechpartner mit seinen Kontaktdaten, Anfragen, Bestellungen, Lieferungen usw. gehören, die ebenfalls als Objekte darstellbar sind (Fig. 1). Der objektorientierte Ansatz mit der Integration von Daten und Methoden bietet mit den Mechanismen der Vererbung, Kapselung und Polymorphismus viele Vorteile gegenüber den relationalen Tabellen. In der Softwareentwicklung hat sich der objektorientierte Ansatz gegenüber dem prozeduralen (prozessual) durchgesetzt, aber noch nicht bei den Datenbanken. So ist in der Patentschrift EP 0 504 085 B1 eine Methode für den Zugriff auf eine relationale Datenbank aus einer objektorientierten Umgebung heraus beschrieben.

Aus der DE 10 2010 010 035 A1 ist eine Objektdatenbank bekannt, bei der die Objekte jeweils aus Einheiten mit Attributen und Methoden bestehen. Zur Erstellung von neuen Objekten werden Objektvorlagen herangezogen. Hierzu werden bestehende Objekte und zugehörige Beziehungen kopiert und abgespeichert.

Des weiteren gibt es auch noch die sogenannten NoSQL (oft gemeint als Not only SQL) Datenbanken. Ein Vertreter dieser Gruppe sind die Key-Value-Datenbanken. Wie der Name schon sagt, gibt es eindeutige Schlüssel, denen ein oder auch mehrere Werte zugeordnet werden. Der Zugriff auf die Daten erfolgt nicht über Relationen, sondern nur über die Keys. Der Zugriff über die Werte ist damit nicht möglich, es sei denn, man erstellt einen zusätzlichen rückwärtigen Eintrag mit der Value-Key-Beziehung. Key-Value-Datenbanken arbeiten nicht wie die relationalen mit festen Schemata, sind gut für die Verteilung geeignet, aber eignen sich nicht für jede Anwendung wie z.B. nicht für das Semantic Web.

Das Semantic Web setzt auf Graphdatenbanken, die ebenfalls zu den NoSQL Anwendungen zählen. Sie bilden Strukturen ab, indem sie Knoten (Entitäten) mit Kanten (Relationen) verbinden und diese Graphen z.B. mit Triples definieren. GraphDatenbanken zeigen Vorteile, wenn es um vielschichtig vernetzte Daten geht, wie z.B. in Sozialen Netzwerken: Mann1 kennt Frau1; Mann1 kennt Frau2; Frau1 kennt Frau3. Mit Hilfe von Traversierung im Graphennetz können z.B. sehr effizient die Kontakte 2. Grades von Mann1 bestimmt werden: Frau3. Graphdatenbanken setzen kein festes Schema voraus, so dass sie sehr einfach erweiterbar sind. Eine Erweiterung stellt das Property Graph Model zur Verfügung. Dabei erhalten die Knoten zusätzliche Eigenschaften als Key Value Pairs. Das könnte in dem erwähnten Kontaktnetzwerk das Alter der Personen sein.

Ist ein Datenbestand auf nur einem Server in einer Datenbank gespeichert, spricht man von unikaten Daten. Dieser Rechner befindet sich in einer Lokation einer Unternehmung und alle Anfragen von anderen Standorten werden an diese eine Datenbank gestellt, was bei international agierenden Unternehmungen zu Performance Problemen führen kann. Abhilfe schaffen da verteilte Datenbanken. Dabei kann der Datenbestand redundant als Replikat auf mehreren Servern an verschiedenen Standorten verteilt werden, wobei aber erhöhte Anforderungen an die Datenkonsistenz gestellt werden. Eine weitere Möglichkeit, Datenbanken zu verteilen, bietet die partitionierte Datenhaltung. Bei einer horizontalen Fragmentierung liegen die Datensätze nicht redundant auf verschiedenen Server, sondern nur die jeweils für einen Standort notwendigen Daten sind an dem Standort gespeichert. Bei einer vertikalen Fragmentierung sind die für den jeweiligen Standort logisch zusammenhängende Daten aufgeteilt, z.B. bei einer Personaldatenbank die Gehälter bei der Personalabteilung und die Kontaktdaten am Produktionsstandort. In der Patentschrift EP 13 89 5720.4 wird eine Methodik für eine dynamisch skalierbare relationale Datenbank für eine verteilte heterogene Plattform vorgeschlagen mit einem Agenda Server und Supervisor Prozess Modul. Diese betreffen die Datenverwaltung, die Daten selbst sind weiterhin in relationalen Datenbanken gespeichert. Objektorientierte Datenbanken speichern die Daten je nach Anforderung in mehr oder weniger großen Datenbanken und können bei Bedarf ebenfalls fragmentiert werden. Die objektorientierten Beziehungen machen eine Aufteilung aber nicht einfacher. Auch hier spricht man von Fragmentierung, wenn logisch zusammenhängende Objekte aufgeteilt werden. Die Objekte einzeln für sich zu speichern würde den Verwaltungsaufwand des ooDBMS unbrauchbar hoch treiben.

### 2.4 Datensicherheit

Wie die Beispiele zeigen, speichern Unternehmungen erhebliche Mengen an Daten aus den unterschiedlichsten Bereichen. Im Zuge der Entwicklung neuer digitaler Geschäftsmodelle nehmen die Art und die Menge an erhobenen, gespeicherten und zu schützenden Daten rapide zu. Personenbezogene Daten spielen dabei eine Sonderrolle. So regelt das Bundesdatenschutzgesetz (BDSG) in §1 den Schutz des Einzelnen im Umgang mit seinen personenbezogenen Daten. Neben diesen gesetzlichen Forderungen haben Unternehmungen ein sehr hohes Interesse, auch alle übrigen Daten vor unberechtigten Zugriff zu schützen; denn in den Datenbanken steckt sehr viel, wenn nicht sogar das komplette Know-how: innovative Produkte, effiziente Produktionsprozesse, Geschäftsprozesse, Werksnormen und Arbeitsanweisungen, die spezielles Know-how beschreiben usw. Der Schutz von Daten vor unberechtigten Zugriffen ist für eine Unternehmung überlebensnotwendig. Das Thema Datensicherheit ist sehr komplex und daher sei hier auf die IT-Grundschutz-Kataloge des Bundesamtes für Sicherheit in der Informationstechnik (BSI) verwiesen. Als ein weiteres Beispiel sei die EU-Datenschutz-Grundverordnung (DSGVO) genannt, die im Mai 2018 in Kraft tritt. Damit gehören personenbezogene Daten dem Nutzer, nicht dem mit der Datenverarbeitung befassten Internetdienst. Um die Bestimmungen umzusetzen, wird Unternehmungen eine Übergangsfrist von zwei Jahren eingeräumt, um die entsprechenden Maßnahmen zu ergreifen, wie z.B. Datenbanken anzupassen und datenschutzrechtliche Prozesse zu etablieren. Trotz Sicherheitsmaßnahmen wie z.B. Multifactor Authentication und Kryptoverfahren kommt es immer wieder vor, dass unberechtigte Personen sich Zugriff auf vertrauliche Daten beschaffen. Besteht durch einen Cyberangriff Zugang zu unikaten Datensätzen in einer Datenbank, sind alle gespeicherten Daten inkl. ihrer Strukturen für den Angreifer verfügbar. Besteht unerlaubter Zugriff auf partitionierte Daten, sind nicht alle Datensätze ungeschützt ausgeliefert, sondern nur die auf dem entsprechenden Server gespeicherten.

Aus der US 6 078 926 A ist ein Verfahren zur Verarbeitung von Daten bekannt, bei der aus einer relationalen Datenbank Daten extrahiert und in Objekten gespeichert werden. Die Daten werden dann in objektorientierten Programmen weiterverarbeitet. Es wird lediglich eine Software erzeugt, ohne dass ein Bezug zu einer objektorientierten Datenbank hergestellt wird.

Aus der US 2005/149344 A1 ist eine relationale Datenbank bekannt, in der lediglich Kombinationen von bestimmten Suchparametern und den ihnen zugeordneten Regeln abgelegt ist. Hierdurch wird die Struktur der Datenbank an sich nicht geändert.

Aus der US 9 600 136 B1 ist ein Verfahren zum Verarbeiten von Daten in einem Objektedatenbanksystem bekannt. Die Objekte des Datenbanksystems bestehen jeweils aus Attributen, Relationen und Methoden. Wenn sich das Attribut auf ein anderes Objekt bezieht, wird das Attribut als Relation bezeichnet. Innerhalb eines Objektes wird somit eine Relation definiert. Das bekannte Verfahren beschränkt sich somit darauf, für eine Erweiterung der Klassen mehrere Attribute einer Objektdatenbank zu definieren. Es ist lediglich eine Software zur Anforderung der Erweiterung von Objekten und nicht zur Veränderung der Struktur der Datenbank. Die angeforderten Änderungen werden mittels eines Datenbank-Administrators auf die Objektdatenbank angewendet.

### 3. Aufgabe

Es ist die Aufgabe der Erfindung, eine Datenbankmethodik für eine holistische Geschäftsmodellierung mit allen Geschäftsdaten und -prozessen einer Unternehmung vorzuschlagen, die eine einfachere Definition, Erweiterung und Änderung der Daten inkl. ihrer Strukturen erlaubt und die so organisiert ist, dass ein skalierbares Sicherheitskonzept mit einhergehender erhöhter Sicherheit für die Datenbank gewährleistet ist.

Zur Lösung der Aufgabe weist die Erfindung die Merkmale des Patentanspruchs 1 sowie des Patentanspruchs 8 auf.

Prinzipiell wird der objektorientierte Ansatz für die Datenbank gewählt, weil diese Methodik eine einfachere, intuitive Definition der Datenstrukturen erlaubt. Alle Geschäftsdaten und Prozesse in einer Unternehmung können an sich schon als Objekte angesehen werden und daher leicht in die Objektstruktur der vorgeschlagenen Objektdatenbank als Businessobjekte (BOs) übertragen werden. Der Begriff Businessobjekt (BO) ist ein beliebig gewählter Name zur Unterscheidung von den üblichen Objekten in Objektdatenbanken. Die vorgeschlagene Methodik wird als Semantic Business Modeling (SBM) bezeichnet. Ein Beispiel ist in Fig. 1 dargestellt. Ein Unternehmen verkauft Produkte an verschiedene Firmen und möchte eine Kunden-Objektdatenbank anlegen. Das BO 'Kunde' hat als Attribut das BO 'Firma', das wiederum hat als Unterobjekte einen Firmennamen und ein Anschrift, die wiederum entsprechend Fig. 1 unterstrukturiert sind. Des weiteren hat das BO ,Kunde' als Bestandteile die Bestellungen und einen Ansprechpartner beim Kunden, z.B. im zentralen Einkauf, mit den entsprechenden weiteren Unterstrukturen. Neben der einfachen Definition von Strukturen wird hier ein weiterer Vorteil deutlich: Ist das BO 'Anschrift' definiert, kann es an verschiedenen Stellen der Objektstruktur wiederverwendet werden, und zwar nicht nur die Struktur und die enthaltenen Daten als Instanzen, sondern im objektorientierten Sinne auch die zugehörigen Prozesse. Die Wiederverwendbarkeit von BOs in der SBM-Methodik macht die Umsetzung von Plattformstrategien in der Objektdatenbank möglich.

Während herkömmliche Datenbanken mehrere Objekte in einer Datenbank mit Keys, Werten und Methoden zusammen ablegen, bietet SBM Möglichkeiten der Partitionierung, nämlich die Fragmentierung der Objekte in Key- und Werteobjekte und die getrennte Speicherung von Attributen und Methoden. Des Weiteren wird auch im Gegensatz zu herkömmlichen Methoden die Datenbankfunktionalität fragmentiert, indem sie selbst als Objekte in der Objektdatenbank gehalten wird und über zugeordnete Services als Methoden realisiert wird, wodurch Objekte nach unterschiedlichen Datenbankprinzipien arbeiten können. Der ausführbare Code ist zusätzlich getrennt von den Methoden gespeichert. Diese Methodik ermöglicht prinzipiell autonom agierende Objekte. Es sind mit SBM neue, skalierbare Speicherstrukturen für eine Objektdatenbank möglich und insbesondere dadurch, dass die fragmentierte Datenbankfunktionalität auf mehrere speziell gesicherte Speicherorte verteilt wird, ist ein deutlicher Gewinn an Datensicherheit zu verzeichnen.

### Businessobjekte Keys (Key-Objekte):

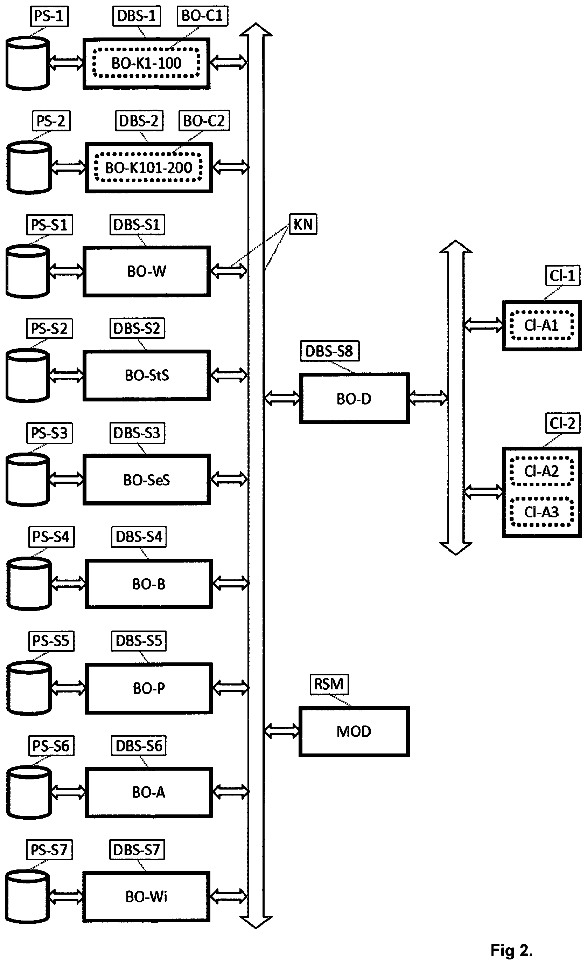

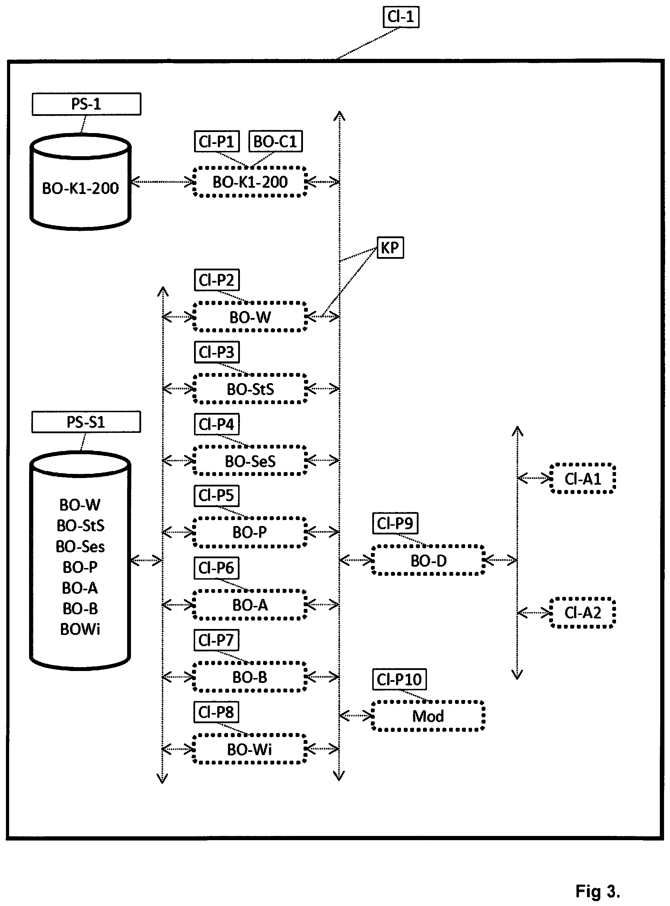

Die BOs Keys (Key-Objekte), in Fig. 1 hell hinterlegt, sind dabei so angelegt, dass sie erstens keine konkreten Daten in ihren gespeicherten Instanzen beinhalten, sondern nur Keys, die eine Referenz auf eine Instanz eines untergeordneten BO darstellen (auch die Namen der BOs sind nur Keys), und zweitens für sich allein, also unabhängig von anderen BOs gespeichert werden können. Alle BOs sind von einem BO 'Basis' abgeleitet, so dass sie über bestimmte Grundattribute und - funktionalitäten verfügen. Die Speicherung von BOs kann in beliebigen Gruppen (Clustern) organisiert erfolgen, wobei die Unabhängigkeit der BOs nicht beeinflusst wird. Das Cluster selbst ist ein BO, das Services bereitstellt, um Anfragen an und die Zugriffe auf das Cluster selbst zu bearbeiten, und diese an die einzelnen BOs delegiert. Die Instanzen der Cluster können auf beliebig vielen Servern verteilt werden (Fig. 2) oder bei Bedarf für Einzelanwendungen nur auf einem einzigen Client (Fig. 3) installiert werden. Vorzugsweise sind dabei Krypto- und Authentifizierungsverfahren zu nutzen. Eine horizontal fragmentierte Datenhaltung und/oder eine Replikation können zusätzlich zur Anwendung kommen. Eine vertikale Fragmentierung ist durch die modulare, unabhängige Handhabung der einzelnen BOs bereits implizit vorgegeben. Diese Vorgehensweise bietet gleich mehrere Vorteile:
1. Besteht unberechtigter Zugriff auf einen Server mit einem Cluster an BOs, sind keine konkreten Werte wie z.B. der Firmenname verfügbar. Auch sind zusätzlich eventuelle Rückschlüsse auf Unterstrukturen ausgeschlossen, wenn die BOs, die zu einer Struktur gehören, auf verschiedenen Servern gespeichert sind. Damit ist eine deutlich verbesserte Datensicherheit gegeben, die dadurch beliebig skalierbar ist, dass eine Unternehmung entscheiden kann, wie viele Server mit jeweils wie vielen Clustern bestückt werden. Die Flexibilität geht sogar so weit, dass die Speicherung mehrerer Cluster oder auch nur eines einzigen Clusters mit allen BOs auf einem Client stattfinden kann; ein kleiner Verein mit einer einfachen Mitglieder-Datenbank wird sicherlich keine eigene Serverlandschaft bereitstellen.
2. Herkömmlichen Datenbanken speichern logisch zusammenhängende Daten wie z.B. alle Datentypen, die zu einem Produkt gehören, z.B. in einer Produktdaten-Datenbank und alle Datentypen, die zu einem Kunden gehören, z.B. in einer Kunden-Datenbank. Sie sind also themenorientiert organisiert und machen daher eine holistische Sicht auf zusammenhänge Daten und Prozesse unmöglich. Monolithische Systeme decken zwar mehrere Themen ab, aber auch nur Teilbereiche der Geschäftsmodellierung und sind nur mit hohem Aufwand änderbar. Die unabhängige Handhabung der BOs bricht dagegen monolithische Strukturen auf und durch die beliebige Strukturierung der BOs wird ein holistischer Ansatz ermöglicht.
3. Die BOs Keys und 'Cluster' übernehmen in ihren Methoden Teile des Datenbankmanagementsystems: es wird dezentralisiert. Das hat positive Auswirkungen auf die Datensicherheit und die Performance.

### Businessobjekt 'Allokation':

Die Allokation, also die Aufteilung der BOs auf verschiedene Speicherorte, kann in einem BO 'Allokation' gespeichert werden. Es enthält keine konkreten Werte, sondern ebenfalls nur Keys. Die Zugriffspfade zu den einzelnen BOs sind dabei sinnvollerweise in mehrere strukturierte BOs aufgeteilt, wie Domänenname, Servername usw. Wird das BO 'Allokation' getrennt von anderen BOs gespeichert, erhöht das zusätzlich die Datensicherheit.

### Businessobjekte Werte (Werte-Objekte):

Während die BOs Keys nur Verweise beinhalten, speichern spezielle BOs die konkreten Werte wie z.B. die Postleitzahl (BO 'Postleitzahl') und den Vornamen (BO 'Eigenname') in Fig. 1. Jedes BO Werte (Werte-Objekte) ist für die Handhabung eines Datentyps zuständig, wobei beliebige Datentypen definiert werden können im Gegensatz zu den festen Datentypen in den herkömmlichen Datenbanken, weil auch für die BOs Werte das erwähnte Unabhängigkeitsprinzip besteht. BOs Werte beinhalten also Key-Value-Relationen wie z.B. für Datumsangaben, Telefonnummern, Eigennamen, zeichenkettenorientierte Daten (Wörter) usw. Nur die BOs Keys in der untersten Ebene in Fig. 1 wie Vor- und Nachname beinhalten einen Key, der im BO 'Eigenname' zu finden ist (in Fig. 1 grau hinterlegt der aufgelöste Key). Spezielle BOs Werte können statt konkreter Werte auch Formeln beinhalten. Für die Speicherung der BOs Werte gelten die gleichen Verfahren wie die für die BOs Keys beschriebenen. Die speziellen BOs Werte werden im objektorientierten Sinne von einem Basis Objekt, dem BO 'Basiswerte' abgeleitet, das die Attribute und Methoden beinhaltet, die für alle speziellen BOs Werte gültig sind. Neben der hardwaretechnischen Verteilung der BOs bringt die inhaltliche Aufteilung in Keys und konkrete Daten weitere folgende Vorteile:
1. Ein zusätzlicher, deutlicher Gewinn an Datensicherheit. Die konkreten Werte z.B. personenbezogener Daten mit Namen, Anschrift, Geburtsdatum usw. sind nicht in einer Datenbank gespeichert, sondern alle Vor- und Nachnamen z.B. in einem BO 'Eigenname' und alle Postleitzahlen z.B. in einem BO 'Postleitzahl' können getrennt voneinander an verschiedenen Speicherorten abgelegt werden. Erst die übergeordneten BOs beinhalten gültige Kombinationen über die Keys.
2. Die strikte Aufteilung in Keys und Werte ermöglicht eine einfache Austauschbarkeit der BOs Werte, um z.B. Mehrsprachigkeiten zu realisieren. Existiert ein BO Werte, das BO 'Wörterbuch', das alle zeichenkettenorientierten Daten, sprich Wörter ohne Eigennamen, in einer Sprache enthält, kann durch Austauschen dieses BO 'Wörterbuch' mit einem anderen Wörterbuch, z.B. BO 'Wörterbuch-Eng', das die Wörter in der englischen Sprache enthält, eine Mehrsprachigkeit ohne jegliche Beeinträchtigung der Funktionalität der Objektdatenbank sichergestellt werden.

### Businessobjekt 'Struktursemantik' (Struktursemantik-Objekt):

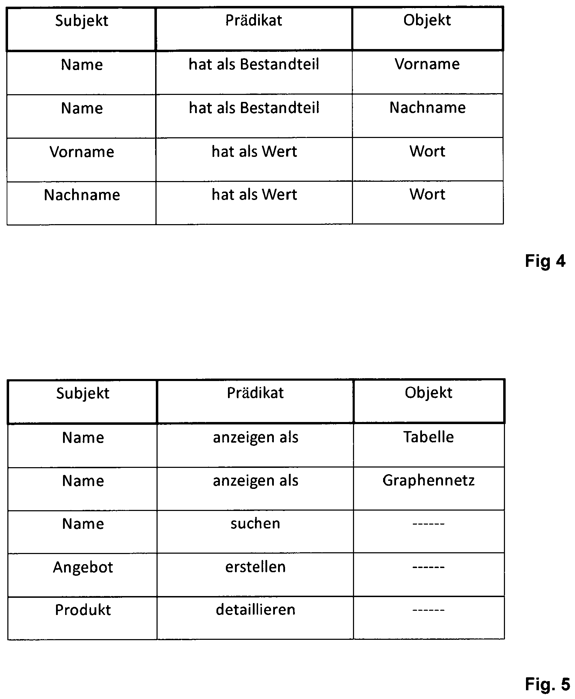

Das Erzeugen von BOs inkl. der Festlegung ihrer strukturellen Beziehungen ist mit SBM über natürlichsprachliche Sätze mit Subjekt, Prädikat und Satzobjekt möglich. Satzerweiterungen mit einem Adverb, Adjektiven und /oder anderen Grammatikbausteinen sind möglich. Das BO 'Struktursemantik' (Struktursemantik-Objekt) selbst ist aus den BOs 'Subjekt', 'Prädikat' und 'Satzobjekt' zusammengesetzt. Ihre konkreten Werte sind im BO 'Wörterbuch' zu finden. Die Definition der BO Strukturen wird also selbst wie ein BO behandelt und damit gilt das oben für BOs Gesagte auch hier. In Fig. 4 ist eine Beispiel für die Struktur des BO 'Name' dargestellt. Erzeugt der Anwender im BO 'Struktursemantik' die Instanz 'Name' 'hat als Bestandteil' 'Vorname', werden die BOs 'Name' und 'Vorname', wenn sie noch nicht existieren, in der Objektdatenbank mit Hilfe entsprechender Methoden des BO 'Struktursemantik' angelegt und mit der entsprechenden Struktur erzeugt oder erweitert. Es sind nicht nur einfache Beziehungen wie 'hat als Bestandteil' möglich, sondern auch andere, komplexere Strukturierungen wie z.B. 'ist speziell', um eine Vererbung zwischen zwei BOs zu ermöglichen. Die komplette Struktur eines BOs zum Auflösen der Keys in Werte wie z.B. 'Kunde' in Fig. 1 kann nur mit Hilfe der Struktursemantik rekonstruiert werden. Weitere Vorteile sind durch die semantische Definition und die Trennung von Daten und Struktur ersichtlich:
1. Ein nochmals verbesserte Datensicherheit: Wenn ein unberechtigter Zugriff auf BOs besteht, ist für die komplette Auflösung der Strukturen auch der Zugriff auf das BO 'Struktursemantik' notwendig, welches vorteilhaft an einem gesonderten Speicherort abgelegt ist. Und selbst wenn die Struktur der BOs bekannt sein sollte, ist noch der Zugriff auf die BOs Werte erforderlich.
2. Für das Anlegen neuer BOs mit ihren Strukturen sind keine Programmierkenntnisse nötig. Über die natürlichsprachlichen Semantiken können die jeweiligen Experten in einer Unternehmung ohne spezielle Datenbankkenntnisse BOs in der SBM Datenbank definieren. Die Methoden des BO 'Struktursemantik' übernehmen die Anlage in der Objektdatenbank.
3. Es werden nur die Datenobjekte angelegt, die auch tatsächlich benötigt werden, während bei gekauften Datenbanken wie z.B. einem Produktdatenmanagement System nicht alle verfügbaren Datenstrukturen und Funktionen für jede Unternehmung brauchbar sind. Dadurch können Kosten eingespart werden. Die Anwender bekommen genau das zur Verfügung gestellt, was sie benötigen, und ersparen sich dadurch lästiges Suchen. Die Arbeit wird effektiver.

### Businessobjekt 'Servicesemantik' (Servicesemantik-Objekt):

Bisher war im objektorientierten Sinne von der Handhabung der Attribute und noch nicht die der Methoden die Rede. In der SBM Methodik sind Attribute von BOs wiederum BOs, die mit dem BO 'Struktursemantik' angelegt werden, und Methoden sind Services, die im BO 'Servicesemantik' (Servicesemantik-Objekt) eingegeben werden. Die Services werden ebenfalls mit natürlichsprachlichen Sätzen, bestehend aus Subjekt, Prädikat und Satzobjekt, wobei letzteres optional ist, definiert.

Semantische Erweiterungen mit anderen Grammatikobjekten sind möglich. Einem BO, dem Subjekt im Satz, wird ein Service, dem Prädikat, zugeordnet, z.B. 'Angebot' 'erstellen' oder 'Produkt' 'detaillieren' (Fig. 5). Die Beispiele sind Teile eines Produktentstehungsprozesses und verdeutlichen, dass Services auch Prozesse in einer Unternehmung abbilden können. Dabei werden die Prozessschritte nicht mehr bestimmten Rollen (Verantwortlichkeiten) zugeordnet, sondern den BOs. Das gilt auch für das dezentralisierte Datenbankmanagement System. Das BO 'Basis' definiert z.B. für alle abgeleiteten BOs Services wie suchen, ändern, anzeigen als Tabelle (Fig. 5) usw. Im BO 'Servicesemantik' sind nur die Servicezuordnungen gespeichert und keine konkreten Ausführungsbestimmungen. Ein BO weiß damit, was es an Services anbieten kann: Objektdatenbank-Funktionalität, Prozessschritte, Aktionen usw. Für das BO 'Servicesemantik' inkl. der untergeordneten BOs gilt das vorher für BOs Erwähnte.

### Businessobjekt 'Prozess' (Prozess-Objekt):

Das BO 'Prozess' legt die konkreten Prozessschritte zu den Servicezuordnungen im BO 'Servicesemantik' fest. Die Struktur des BO 'Prozess' besteht aus einem BO 'Servicesemantik', das den aufrufenden Service darstellt, und einem BO 'Prozessschritt', das wiederum ein BO 'Startzustand', ein weiteres BO 'Servicesemantik', dem auszuführenden Service oder Delegaten, und ein BO 'Endzustand' beinhaltet. BOs können beliebige Start- und Endzustände besitzen; sie zeigen an, in welchem Status eines Zustandes sich ein BO befindet wie z.B. der Zustand 'Entwicklung' eines Produktes, das sich gerade in der 'Detaillierung' befindet. Wird ein Service angefordert und ist dieser im BO 'Prozess' als aufrufender Service zu finden, wird der zugehörige Prozessschritt ausgeführt, indem der zugehörige Startzustand eines BOs gesetzt und der zugehörige Delegat, der auch das Erstellen einer Aufgabe für einen Mitarbeiter beinhalten kann, gestartet wird. Der Delegat selbst kann auch ein aufrufender Service in einem anderen Prozess sein, so dass dieser automatisch gestartet wird. Ist der auszuführende Service beendet, wird der Endzustand gesetzt. Ist der Endzustand gleichzeitig auch ein Startzustand eines anderen Prozesses, wird der neue Prozess automatisch gestartet, wodurch sequentielle Prozessabläufe möglich sind. Die Zustände brauchen dabei nicht demselben BO, das für den aufrufenden Service verantwortlich ist, zugeordnet sein; das gilt auch für den auszuführenden Service. Damit können beliebige Prozessfolgen festgelegt und durchlaufen werden. Das BO 'Prozess' kann mit Hilfe des BO 'Struktursemantik' weitere BOs als Attribute erhalten wie Prozessverantwortliche usw. Für das BO 'Prozesse' inkl. der untergeordneten BOs gilt das vorher für BOs Erwähnte. Diese Art der Prozessdefinition inkl. der Servicedefinition bringt folgende Vorteile:
1. BOs wissen selbstständig, was zu tun ist. Während in der prozessorientierten Geschäftsmodellierung Daten als Parameter den Prozessen untergeordnet sind, dreht der objektorientierte SBM Ansatz dieses Verhältnis um: Daten werden zunächst als BOs definiert und Prozesse diesen Objekten als Methoden zugeordnet. Prozesse können daher gesteuert von den BOs automatisch ablaufen, ohne zusätzlichen Aufwand für eine Workflow Programmierung, und BOs können dem Anwender genau die und nur die Prozesse anzeigen, die es auch ausführen kann. Prozesse schlummern nicht mehr in einer eigenen Datenbank als einfache Dokumente und ein Suchen nach ihnen entfällt, weil BOs selbst wissen, was zu tun ist.
2. Ein einfaches Delegieren und Propagieren der Aufgaben zwischen den BOs ist frei definierbar, weil die Services und Zustände verschiedenen BOs zugeordnet werden können. Dadurch gibt es keine Einschränkung auf Prozesse, die nur von einem BO ausgeführt werden können.
3. Wenn einem BO ein Prozess als eine neue Methode hinzugefügt werden soll, wird nicht das BO in der Objektdatenbank geändert, sondern einfach den BOs 'Servicesemantik' und 'Prozess' eine neue Instanz hinzugefügt.
4. Nicht nur die getrennte Speicherung von Daten (Attribute) und Prozessen (Methoden) bringt eine verbesserte Datensicherheit, sondern auch die Tatsache, dass die in einem Prozess verwendeten BOs (Services, Zustände) getrennt voneinander an verschiedenen Speicherorten abgelegt werden können. Prozesse beinhalten sensibles Know-how einer Unternehmung.

### Businessobjekt 'Aktion':

Das BO 'Aktion' ist im Prinzip genauso aufgebaut wie das BO 'Prozess' mit dem einen Unterschied, dass der Delegat keinen Service definiert, sondern den Namen eines ausführbaren Softwaremoduls beinhaltet. Es gelten auch die gleichen Prinzipien für den Ablauf, nur dass hier anstelle eines Services ein Softwaremodul über seinen Namen gestartet wird, um konkrete Aktionen auszuführen. Die Softwaremodule werden als BOs in der Objektdatendatenbank angelegt und können in mehreren Bibliotheken verteilt an mehreren Speicherorten abgelegt werden. Für das BO 'Aktion' inkl. der untergeordneten BOs gilt das vorher für BOs Erwähnte. Neben den bereits erwähnten Vorteilen für das BO 'Prozess' bieten die Aktionen weitere Vorteile:
1. BOs werden intelligent, weil sie selbstständig bei Erreichen eines bestimmten Zustandes konkrete Aktionen ausführen können. Ist z.B. in einer Werksnorm eine 3D Standardgeometrie vorgegeben, die immer bei der Konstruktion einer bestimmten Komponente eines Produktes verwendet werden muss, kann eine entsprechende Aktion diese Geometrie automatisch in die Konstruktion einfügen.
2. Ausführbarer Code in speziellen BOs ist modularisiert von anderen BOs getrennt, was die Forderung nach einem nicht monolithischen System unterstützt. Aufgrund der Modularisierung ist die Software wesentlich einfacher zu warten. Die beschriebenen Prinzipien für Prozesse und Aktionen lassen sich auf die Datenbankfunktionalitäten selbst anwenden. Möchte z.B. ein Anwender in den Datensätzen (Instanzen) des BO 'Kunde' suchen, bietet ihm BO 'Kunde' Services wie 'suchen', 'anzeigen als' 'Tabelle', 'eingeben' usw. selbstständig an. Wählt der Anwender 'anzeigen als' 'Tabelle', wird der beschriebene Ablauf für Prozesse und Aktionen durchgeführt, so dass er letztendlich die gewünschte Anzeigemaske für die Kundendatensätze bekommt. Wird der Name 'suchen' des Moduls im BO 'Aktion' z.B. ersetzt durch den Namen 'finden', kann mit diesem einfachen Austausch eine anderes Softwaremodul gestartet und eine anderes Userinterface angezeigt werden.
3. Die Trennung von Code BOs und anderen Datenbank BOs und die Aufspaltung der Code BOs selbst in verschiedene Bibliotheken an verschiedenen Speicherorten erzeugen einen zusätzlichen Gewinn an Datensicherheit.
4. In Zusammenarbeit mit den BOs 'Prozess' und 'Aktion' können die Objekte Prozesse selbständig und automatisch ausführen und zwar nicht nur zum Zwecke der Steuerung, sondern auch zum Zweck einer holistischen Simulation.

### Businessobjekt 'Berechtigung':

Mitarbeitern einer Unternehmung sind in der Regel bestimmte Rollen und damit Verantwortlichkeiten zugeordnet. Unterschiedliche Rollen unterliegen in der Regel auch unterschiedlichen Datenschutzbestimmungen. Daher steuern Berechtigungskonzepte detailliert, was ein Mitarbeiter mit einer bestimmten Rolle an Daten sehen darf und was nicht. Die Berechtigungen einzelner Rollen werden im BO 'Berechtigung' definiert, wobei einem BO 'Rolle' ein oder mehrere andere BOs inkl. der Berechtigung wie lesen, ändern usw. zugeordnet werden. Damit kann der Zugriff auf einzelne BOs oder auf ganze BO Hierarchien erlaubt werden. Wenn erforderlich kann auch der Zugriff auf einzelne Instanzen eines BOs beschränkt werden. BOs können über ein BO 'Kontext' bestimmten Kontexten zugeordnet werden wie z.B. Einkauf, Personal, Entwicklung usw. Dadurch können Berechtigungen auch für ganze Kontexte festgelegt werden, ohne einzelne BOs zuzuordnen. Durch einen Kontextwechsel kann auch die oben erwähnte Mehrsprachigkeit leicht umgesetzt werden. Für das BO 'Berechtigung' inkl. der untergeordneten BOs gilt das vorher für BOs Erwähnte. Diese Art ein Berechtigungskonzept zu erstellen bringt folgende Vorteile:
1. Gekaufte Datenbanken wie z.B. für ProductLifecycle Management beinhalten oft ein sehr komplexes, schwer zu wartendes Berechtigungsmanagement. Die SBM Methodik mit dem BO 'Berechtigung' erlaubt es Unternehmungen, die Komplexität eines Berechtigungskonzeptes den eigenen Bedürfnissen anzupassen und die Berechtigungen einfach zuzuordnen. Die Mehrstufigkeit der Berechtigungsmöglichkeiten für Kontexte, BO Strukturen, einzelnen BOs bis hin zu Instanzen von BOs verbessert die Übersicht und spart Zeit bei der Definition. Erhält ein Mitarbeiter z.B. Leseberechtigung auf das BO 'Kunde' (Fig. 1), kann ihm, wenn gewünscht, auch die gesamte Unterstruktur freigegeben werden.
2. Das BO 'Berechtigung' kann auch über Prozesse und Methoden verfügen, die die Rechtevergabe unterstützen, wie z.B. ein Freigabe-Workflow.
3. Wie auch schon bei den anderen BOs erwähnt besteht auch hier die Möglichkeit einer gesonderten, speziell gesicherten Speicherung.

### Businessobjekt 'Regel':

Wissensmanagement wird effizienter und effektiver, wenn es nicht nur Informationen bereitstellt, sondern wenn das Wissen selbst eine aktive Rolle übernimmt und selbst weiß, wo es angewendet werden muss. Da Prozessmanagement immer auch ein Teil des Wissensmanagement ist, sind die BOs 'Service', 'Prozesse' und 'Aktionen' bereits Teil des aktiven Wissens. Das BO 'Regel' unterstützt Entscheidungen und Services, indem es Regeln speichert, die wie beim BO 'Struktursemantik' semantisch mit natürlichsprachlichen Sätzen definiert werden. Im Konditionsteil wird auf die Attribute von BOs oder auf ihre Zustände referenziert, wobei auch mehrere Konditionen logisch miteinander verknüpft werden können. Der Konsequenzteil beinhaltet Services oder beschreibt neue Zusammenhänge, die nicht unbedingt BOs referenzieren müssen. Neben der Möglichkeit Wissen in Regeln abzubilden sind andere BOs denkbar, die Wissen in anderen Repräsentationen speichern und handeln lassen. Für das BO 'Regel' inkl. der untergeordneten BOs gilt das vorher für BOs Erwähnte. Diese Art Wissen zu verwalten bringt folgende Vorteile:
1. Wie im BRM gefordert, werden Regeln und Prozesse getrennt voneinander definiert, sind aber durch die SBM Methodik trotzdem einfach miteinander zu verknüpfen.
2. Wie auch schon bei den anderen BOs erwähnt besteht auch hier die Möglichkeit einer gesonderten, speziell gesicherten Speicherung.
3. Während Wissen üblicherweise in separaten Wissensdatenbanken abgelegt wird, zeigt sich auch hier bei der Wissensspeicherung und -nutzung der holistische Ansatz von SBM. Das BO 'Regel' ist, wie alle anderen BOs auch, beliebig mit anderen BOs verknüpfbar, so dass die BOs selbst Wissen in Form von Regeln zur Verfügung stellen können und auch selbstständig danach handeln können. Das wissensbasierte, selbständige Agieren der BOs geht weit über den Ansatz "Die richtige Information zur richtigen Zeit am richtigen Ort" hinaus.

### Businessobjekt 'Dispatcher':

Clients kommunizieren mit der Datenbank über Instanzen des BO 'Dispatcher'. Der Dispatcher weiß, welche anderen BOs ihm Services, Prozesse und Aktionen zur Verfügung stellen, um die angefragten Informationen bereitzustellen. Er fragt z.B. das BO 'Allokation', wo die Daten zu finden sind, das BO 'Berechtigung', ob der Zugriff erlaubt ist, und entsprechende BOs 'Cluster', die ihm Werte liefern sollen. Seine eigenen Methoden werden auch über die BOs 'Service', 'Prozess' und 'Aktion' definiert und gesteuert. Für das BO 'Dispatcher' inkl. der untergeordneten BOs gilt das vorher für BOs Erwähnte. Diese Art des Datenzugriffs zu erstellen bringt folgende Vorteile:
1. Datenbankzugriffe können von mehreren Instanzen des Dispatchers gesteuert werden, so dass die Rechenlast auf verschiedene Server verteilt wird.
2. Wie auch schon bei den anderen BOs erwähnt besteht auch hier die Möglichkeit einer gesonderten, speziell gesicherten Speicherung.

### Businessobjekt 'Basisgraph':

Während die BOs Keys tabellenorientiert sind und dadurch für vernetzte Daten eher weniger geeignet sind, bietet das BO 'Basisgraph' Attribute und Methoden, die für BOs, die nach dem Graphenprinzip arbeiten, notwendig sind und von diesem BO geerbt werden können. Um nur ein Beispiel zu nennen, kann ein BO 'Kontakte' erstellt werden. Das beinhaltet das erwähnte Beispiel als 3 Instanzen: 'Mann1' 'kennt' 'Frau1'; 'Mann1' 'kennt' 'Frau2'; 'Frau1' 'kennt' 'Frau3'. Weitere Instanzen können sein: 'Frau1' 'ist verheiratet mit' 'Mann3'; 'Mann3' 'ist Vater von' 'Frau2'. Die Methoden stellen z.B. Traversierungsalgorithmen über das BO 'Aktion' bereit. Es können beliebige andere BOs definiert werden, die nach dem Graphenprinzip arbeiten. Für das BO 'Basisgraph' und davon abgeleitete BOs inkl. der untergeordneten BOs gilt das vorher für BOs Erwähnte. Die Möglichkeit Graphenprinzipien zu nutzen bringt folgende Vorteile:
1. Verschiedene Prinzipien zur Datenhandhabung (tabellen-, objekt- und graphenorientiert) stehen in einer Datenbank zur Verfügung. Damit kann die jeweils beste Methodik für einen spezifischen Anwendungsfall ausgewählt werden. Neben dem Graphenprinzip sind in der gleichen Art und Weise auch andere Methodiken wie z.B. die der dokumentenbasierten Datenbanken, der Blockchain und der Neuronalen Netze nutzbar.
2. Die Graphen BOs stehen nicht für sich allein, sondern können Verknüpfungen zu beliebigen anderen BOs besitzen. Die Knoten in einem Graphen können z.B. die Keys der Instanzen in einer Personendatenbank sein, wodurch im Knoten Rückschlüsse auf Namen, Adressen, Geburtsdaten usw. möglich sind. Somit können die Inhalte anderer BOs als Properties der Knoten angesehen werden. Die Nutzung verschiedener Prinzipien bei gleichzeitiger Verknüpfung ihrer Daten unterstützt im besonderen Maße die Forderung nach einer holistischen Geschäftsmodellierung.

### 5. Bezeichnerliste

- BO: Businessobjekte
- BO-Ki-j: Businessobjekt Keys Nummer i bis j
- BO-W: Businessobjekte Werte
- BO-StS: Businessobjekt 'Struktursemantik'
- BO-SeS: Businessobjekt 'Servicesemantik'
- BO-P: Businessobjekt 'Prozess'
- BO-A: Businessobjekt 'Aktion'
- BO-B: Businessobjekt 'Berechtigung'
- BO-Wi: Businessobjekt 'Wissen'
- BO-D: Businessobjekt 'Dispatcher'
- BO-Ck: Businessobjekt' Cluster' Nummer k
- Cl-p: Client Nummer p
- CL-Ao: Client Application Nummer o
- CL-Ps: Client Prozess Nummer s
- Mod: Softwaremodule als Businessobjekt
- DBS-m: Datenbankserver Nummer m
- DBS-Sn: Datenbankserver mit erhöhter Sicherheit Nummer n
- PS-q: Permanentspeicher Nummer q
- PS-Sr: Permanentspeicher mit erhöhter Sicherheit Nummer r
- RSM: Rechner mit erhöhter Sicherheit für Mod
- KN: Kommunikationsnetzwerk
- KP: Kommunikation zwischen Prozessen

### 5. Bezeichnerliste

- BO-Ki-j: Businessobjekt Keys Nummer i bis j
- BO-W: Businessobjekte Werte
- BO-StS: Businessobjekt 'Struktursemantik'
- BO-SeS: Businessobjekt 'Servicesemantik'
- BO-P: Businessobjekt 'Prozess'
- BO-A: Businessobjekt 'Aktion'
- BO-B: Businessobjekt 'Berechtigung'
- BO-Wi: Businessobjekt 'Wissen'
- BO-D: Businessobjekt 'Dispatcher'
- BO-Ck: Businessobjekt' Cluster' Nummer k
- Cl-p: Client Nummer p
- CL-Ao: Client Application Nummer o
- CL-Ps: Client Prozess Nummer s
- Mod: Softwaremodule als Businessobjekt
- DBS-m: Datenbankserver Nummer m
- DBS-Sn: Datenbankserver mit erhöhter Sicherheit Nummer n
- PS-q: Permanentspeicher Nummer q
- PS-Sr: Permanentspeicher mit erhöhter Sicherheit Nummer r
- RSM: Rechner mit erhöhter Sicherheit für Mod
- KN: Kommunikationsnetzwerk
- KP: Kommunikation zwischen Prozessen

## Patentansprüche

1. Verfahren zum Verarbeiten von Daten in einem Objektdatenbanksystem, wobei das Verfahren das Erstellen einer Mehrzahl von Objekten (BO) aufweist, **dadurch gekennzeichnet,**
- **dass** die Objekte (BO) jeweils als fragmentierte Objekte (BO) an verschiedenen Orten abgespeichert werden, wobei sie mit anderen fragmentierten Objekten (BO) über Beziehungen miteinander verknüpft sind,
- **dass** die Objekte (BO) in Attribute und Methoden fragmentiert werden, wobei die Attribute und Methoden getrennt abgespeichert werden und wobei die Attribute als fragmentierte Objekte (BO) abgespeichert werden,
- **dass** die Beziehungen zwischen den fragmentierten Objekten (BO, BO-StS) entsprechend einer frei definierbaren Satzstruktur erstellt werden zur Bildung von strukturellen Beziehungen und
- **dass** die Methoden als Zuordnung von als Objekte ausgebildeten Services (BO-SeS) oder als Objekte ausgebildeten Aktionen (BO-A) zu fragmentierten Objekten entsprechend einer frei definierbaren Satzstruktur erstellt werden zur Bildung von strukturellen Methoden, und
- **dass** die fragmentierten Objekte (BO) und die strukturellen Beziehungen und die strukturellen Methoden in einem Datenspeicher an einem Ort oder in einem über mehrere Orte verteilt angeordneten Datenspeicher einer Datenbank (DBS-Sn) abgespeichert werden,
- **dass** zur objektorientierten Geschäftsmodellierung Daten als fragmentierte Objekte (BO) definiert werden und Prozessen diesen fragmentierten Objekten (BO) als Methoden zugeordnet werden, so dass die Prozesse gesteuert von den fragmentierten Objekten (BO) automatisch ablaufen.

2. Verfahren nach Anspruch 1, **dadurch gekennzeichnet, dass** die fragmentierten Objekte (BO) in beliebigen Clustern abgespeichert werden und dass jedes Cluster als Objekt modular unabhängig von anderen Clustern fragmentiert abgespeichert wird.

3. Verfahren nach Anspruch 1 oder 2, **dadurch gekennzeichnet, dass** die fragmentierten Objekte (BO) entweder ausschließlich durch Key-Objekte oder durch Werte-Objekte gebildet werden, wobei das Key-Objekt in seinen gespeicherten Instanzen nur Referenzen auf eine Instanz eines untergeordneten fragmentierten Objektes (BO) und keine konkreten Daten beinhaltet.

4. Verfahren nach einem der Ansprüche 1 bis 3, **dadurch gekennzeichnet, dass** die strukturellen Methoden eines vorgegebenen Prozesses in einem Prozess-Objekt definiert werden, wobei Prozessschritte durch Zuordnungen eines Servicesemantik-Objektes, in dem die strukturellen Methoden abgespeichert sind, festgelegt werden, dass dem Prozess-Objekt ein aufzurufender Service, ein Startzustand, ein auszuführender Service und ein Endzustand zugeordnet wird, wobei die Ausführung des Prozesses vorsieht:
- Anforderung eines aufzurufenden Services in dem Servicesemantik-Objekt,
- Setzen eines Startzustandes eines Objektes und/oder eines fragmentierten Objektes,
- Ausführung des Services,
- Setzen eines Endzustandes des Objektes und/oder des fragmentierten Objektes nach Abschluss des Services.

5. Verfahren nach einem der Ansprüche 1 bis 4, **dadurch gekennzeichnet, dass** die strukturellen Beziehungen und/oder die strukturellen Methoden durch natürlich sprachliche Sätze definiert werden.

6. Verfahren nach einem der Ansprüche 1 bis 5, **dadurch gekennzeichnet, dass** das Datenbankmanagement-System der Objektdatenbank selbst durch Objekte und/oder fragmentierte Objekte in der Datenbank realisiert wird, wobei die Funktionalität des Datenbankmanagement-Systems über deren Methoden realisiert wird.

7. Verfahren nach einem der Ansprüche 1 bis 6, **dadurch gekennzeichnet, dass** das Objekt und/oder fragmentierte Objekt mit seinen Attributen und Methoden die Definition, die Handhabung, die Erweiterungen und die Speicherung von strukturellen Beziehungen der Objekte bzw. der fragmentierten Objekte untereinander realisiert und die Objekte bzw. fragmentierten Objekte in der Objektdatenbank anlegt.

8. Vorrichtung zum Verarbeiten von Daten in einem Objektdatenbanksystem, wobei als Daten Objekte vorgesehen sind, **dadurch gekennzeichnet,**
- **dass** die Objekte (BO) jeweils als fragmentierte Objekte (BO) an verschiedenen Orten abgespeichert sind, wobei sie mit anderen fragmentierten Objekten (BO) über Beziehungen miteinander verknüpft sind,
- **dass** die Beziehungen zwischen den fragmentierten Objekten (BO, BO-StS) entsprechend einer frei definierbaren Satzstruktur erstellt sind zur Bildung von strukturellen Beziehungen und
- **dass** die Methoden als Zuordnung von als Objekte ausgebildeten Services (BO-SeS) oder als Objekte ausgebildeten Aktionen (BO-A) zu fragmentierten Objekten entsprechend einer frei definierbaren Satzstruktur erstellt sind zur Bildung von strukturellen Methoden, und
- **dass** die fragmentierten Objekte (BO) und die strukturellen Beziehungen und/oder die strukturellen Methoden in einem Datenspeicher an einem Ort oder in einem über mehrere Orte verteilt angeordneten Datenspeicher einer Datenbank (DBS-Sn) abgespeichert sind,
- **dass** zur objektorientierten Geschäftsmodellierung Daten als fragmentierte Objekte (BO) definiert werden und Prozessen diesen fragmentierten Objekten (BO) als Methoden zugeordnet werden, so dass die Prozesse gesteuert von den fragmentierten Objekten (BO) automatisch ablaufen.

9. Vorrichtung nach Anspruch 8, **dadurch gekennzeichnet, dass** die strukturellen Methoden und/oder die strukturellen Beziehungen jeweils in einem gesonderten Objekt abgespeichert sind.

10. Vorrichtung nach Anspruch 8 oder 9, **dadurch gekennzeichnet, dass** die strukturellen Beziehungen in einem Struktursemantik-Objekt und die strukturellen Methoden in einem Servicesemantik-Objekt abgespeichert sind.

## Claims

1. A method for processing data in an object database system, wherein the method comprises creating a plurality of objects (BO), **characterized in that**
- the objects (BO) are each stored as fragmented objects (BO) at different storage sites, wherein said objects (BO) are linked to other fragmented objects (BO) via relationships to one another, the objects (BO) are fragmented into attributes and methods, wherein the attributes and methods are stored separately and wherein the attributes are stored as fragmented objects (BO),
- the relationships between the fragmented objects (BO, BO-StS) are created according to a freely definable sentence structure in order to form structural relationships and
- the methods are created as an assignment of services (BO-SeS) as objects or actions (BO-A) as objects to fragmented objects according to a freely definable sentence structure in order to form structural methods, and
- the fragmented objects (BO) and the structural relationships and the structural methods are stored in a data memory at one location or in a data memory of a database (DBS-Sn) arranged so as to be distributed over a plurality of locations,
for process-oriented business modeling, data are defined as fragmented objects (BO) and processes are assigned to these fragmented objects (BO) as methods, so that processes can therefore take place automatically in a controlled manner by the fragmented objects (BO).

2. The method according to Claim 1, **characterized in that** the fragmented objects (BO) are storedin a any cluster, and **in that** each cluster as an object is stored modularly independent of other clusters in a fragmented manner.

3. The method according to Claim 1 or 2, **characterized in that** the fragmented objects (BO) are formed either exclusively by key objects or by value objects, wherein the key object contains only references to an instance of a subordinate fragmented object (BO) in their stored instances and do not contain any specific data in their stored instances.

4. The method according to one of Claims 1 to 3, **characterized in that** the structural methods of a predetermined process are defined in a process object, wherein process steps are defined by assignments of a service semantics object in which the structural methods are stored, **in that** a service to be called, a start state, a service to be executed and an end state are assigned to the process object, wherein the execution of the process provides for:
- requesting a service to be called in the service semantics object,
- setting a start state of an object and/or a fragmented object,
- executing the service,
- setting an end state of the object and/or of the fragmented object after completion of the service.

5. The method according to one of Claims 1 to 4, **characterized in that** the structural relationships and/or the structural methods are defined by naturallanguage sentences.

6. The method according to one of Claims 1 to 5, **characterized in that** the database management system of the object database itself is realized by objects and/or fragmented objects in the database, wherein the functionality of the database management system is realized via the methods thereof.

7. The method according to one of Claims 1 to 6, **characterized in that** the object and/or fragmented object with its attributes and methods defines, handles, expands and stores structural relationships of objects or of the fragmented objects to one another and creates the objects or fragmented objects in the object database.

8. A device for processing data in an object database system, wherein objects are provided as data, **characterized in that**
- the objects (BO) each stored as fragmented objects (BO) at different storage sites wherein said objects (BO) are linked to other fragmented objects (BO) via relationships to one another,
- the relationships between the fragmented objects (BO, BO-StS) are created according to a freely definable sentence structure in order to form structural relationships and
- the methods are created as an assignment of services (BO-SeS) as objects or actions (BO-A) as objects to fragmented objects according to a freely definable sentence structure in order to form structural methods, and
- the the fragmented objects (BO) and the structural relationships and/or the structural methods are stored in a data memory at a location or in a data memory of a database (DBS-Sn) arranged so as to be distributed over a plurality of locations,
- for process-oriented business modeling, data are defined as fragmented objects (BO) and processes are assigned to these fragmented objects (BO) as methods, so that processes can therefore take place automatically in a controlled manner by the fragmented objects (BO).

9. The device according to Claim 8, **characterized in that** the structural methods and/or the structural relationships are each stored in a separate object.

10. The device according to Claim 8 or 9, **characterized in that** the structural relationships are stored in a structure semantics object and the structural methods are stored in a service semantics object.

## Revendications

1. Procédé de traitement de données dans un système de base de données d'objets, ledit procédé comprenant la création d'une pluralité d'objets (BO), **caractérisé**
- **en ce que** les objets (BO) sont stockés en tant qu'objets fragmentés (BO) respectifs à différents emplacements, où ils sont reliés à d'autres objets fragmentés (BO) au moyen de relations,
- **en ce que** les objets (BO) sont fragmentés en attributs et en méthodes, les attributs et les méthodes étant stockés séparément et les attributs étant stockés en tant qu'objets fragmentés (BO),
- **en ce que** les relations entre les objets fragmentés (BO, BO-StS) sont créées conformément à une syntaxe librement définissable pour la formation de relations structurelles, et
- **en ce que** les méthodes sont créées en tant qu'affectation de services configurés comme objets (BO-SeS) ou d'actions configurées comme objets (BO-A) à des objets fragmentés conformément à une syntaxe librement définissable pour la formation de méthodes structurelles, et
- **en ce que** les objets fragmentés (BO), les relations structurelles et les méthodes structurelles sont stockés dans un stockage de données à un emplacement ou dans un stockage de données réparti en plusieurs emplacements d'une base de données (DBS-Sn),
- **en ce que** pour la modélisation d'entreprise orientée objets, des données sont définies en tant qu'objets fragmentés (BO) et des processus sont affectés en tant que méthodes auxdits objets fragmentés (BO), de sorte que les processus sont exécutés automatiquement sous commande des objets fragmentés (BO).

2. Procédé selon la revendication 1, **caractérisé en ce que** les objets fragmentés (BO) sont stockés dans des clusters quelconques et **en ce que** chaque cluster est stocké en tant qu'objet fragmenté modulairement indépendamment des autres clusters.

3. Procédé selon la revendication 1 ou la revendication 2, **caractérisé en ce que** les objets fragmentés (BO) sont formés soit exclusivement par des objets-clés soit par des objets-valeurs, l'objet-clé ne contenant dans ses instances mémorisées que des références à une instance d'un objet fragmenté (BO) subordonnés et aucunes données concrètes.

4. Procédé selon l'une des revendications 1 à 3, **caractérisé en ce que** les méthodes structurelles d'un processus prescrit sont définies dans un objet de processus, les étapes de processus étant fixées par affectations d'un objet de sémantique de service où sont mémorisées les méthodes structurelles, **en ce qu'**à l'objet de processus sont affectés un service à appeler, un état initial, un service à exécuter et un état terminal, l'exécution du processus prévoyant :
- demande d'un service à appeler dans l'objet de sémantique de service,
- définition d'un état initial d'un objet et/ou d'un objet fragmenté,
- exécution du service,
- définition d'un état terminal de l'objet et/ou de l'objet fragmenté à la fin du service.

5. Procédé selon l'une des revendications 1 à 4, **caractérisé en ce que** les relations structurelles et/ou les méthodes structurelles sont définies par des langages naturels.

6. Procédé selon l'une des revendications 1 à 5, **caractérisé en ce que** le système de gestion de base de données de la base de données d'objets est réalisé même par des objets et/ou des objets fragmentés dans la base de données, la fonctionnalité du système de gestion de base de données étant réalisée par les méthodes de ceux-ci.

7. Procédé selon l'une des revendications 1 à 6, **caractérisé en ce que** l'objet et/ou l'objet fragmenté réalise par ses attributs et méthodes la définition, la manipulation, les extensions et la mémorisation de relations structurelles des objets ou des objets fragmentés et crée les objets ou les objets fragmentés dans la base de données d'objets.

8. Dispositif pour le traitement de données dans un système de base de données d'objets, où des objets sont prévus en tant que données, **caractérisé**
- **en ce que** les objets (BO) sont stockés en tant qu'objets fragmentés (BO) respectifs à différents emplacements, où ils sont reliés à d'autres objets fragmentés (BO) au moyen de relations,
- **en ce que** les relations entre les objets fragmentés (BO, BO-StS) sont créées conformément à une syntaxe librement définissable pour la formation de relations structurelles, et
- **en ce que** les méthodes sont créées en tant qu'affectation de services configurés comme objets (BO-SeS) ou d'actions configurées comme objets (BO-A) à des objets fragmentés conformément à une syntaxe librement définissable pour la formation de méthodes structurelles, et
- **en ce que** les objets fragmentés (BO), les relations structurelles et les méthodes structurelles sont stockés dans un stockage de données à un emplacement ou dans un stockage de données réparti en plusieurs emplacements d'une base de données (DBS-Sn),
- **en ce que** pour la modélisation d'entreprise orientée objets, des données sont définies en tant qu'objets fragmentés (BO) et des processus sont affectés en tant que méthodes auxdits objets fragmentés (BO), de sorte que les processus sont exécutés automatiquement sous commande des objets fragmentés (BO).

9. Dispositif selon la revendication 8, **caractérisé en ce que** les méthodes structurelles et/ou les relations structurelles sont respectivement mémorisées dans un objet séparé.

10. Dispositif selon la revendication 8 ou 9, **caractérisé en ce que** les relations structurelles sont mémorisées dans un objet de sémantique de structure et les méthodes structurelles dans un objet de sémantique de service.
